Europäisches Patentamt

European Patent Office

Office européen des brevets

(19)

(11) Publication number: **0 224 994**
**A2**

# (12) EUROPEAN PATENT APPLICATION

(21) Application number: **86306846.6**

(22) Date of filing: **04.09.86**

(51) Int. Cl.⁴: **G01J 3/50** , G01D 5/26

(30) Priority: **25.11.85 GB 8528982**

(43) Date of publication of application:
**10.06.87 Bulletin 87/24**

(84) Designated Contracting States:
**AT BE CH DE FR GB IT LI LU NL SE**

(71) Applicant: **THE UNIVERSITY OF LIVERPOOL**
**Senate House Abercromby Square P.O. Box 147**
**Liverpool L69 3BX(GB)**

(72) Inventor: **Jones, Gordon Rees**
**17 Brimstage Close**
**Heswall Merseyside(GB)**
Inventor: **Moruzzi, James Lodovico**
**Latrigg, Thurstaston Road**
**Heswall Merseyside L60 6RX(GB)**
Inventor: **Prasad, Akkanapragada Narayana**
**2 Surrey Drive**
**West Kirby Merseyside L48 2HP(GB)**

(74) Representative: **Huntingford, David Ian et al**
**W.P. THOMPSON & CO. Coopers Building**
**Church Street**
**Liverpool L1 3AB(GB)**

(54) **Colour quantification system for precise measurement of parameters inducing colour changes.**

(57) A colour detection system for identifying the colour of incident light, comprises at least two discrete colour detectors (35,36) which have respective response characteristics such that the output signals X, Y ... of the detectors correspond respectively to $X = \int P(\lambda)\bar{x}(\lambda)d\lambda$, $Y = \int P(\lambda)\bar{y}(\lambda)d\lambda$ ..., where $P(\lambda)$ is the spectral power distribution at wavelength $\lambda$ and $\bar{x}(\lambda)$, $\bar{y}(\lambda)$ .. are colour matching functions corresponding to the respective response characteristics of the detectors, and means (37,38,39) for analogue manipulation of X, Y ... to enable the values of x and y in the Chromaticity Diagram corresponding to the incident colour to be calculated.

EP 0 224 994 A2

Fig 12

Xerox Copy Centre

# COLOUR QUANTIFICATION SYSTEM FOR PRECISE MEASUREMENT OF PARAMETERS INDUCING COLOUR CHANGES

The present invention is concerned with a system for quantifying colour, which enables physical and chemical parameters, being sensed by chromatic modulators to be measured unambiguously and with high precision.

Chromatic modulators are sensing devices which involve the detection of spectral changes as the sensing principle. They are distinguishable from wavelength-encoded sensors in that substantial parts or the whole of the optical spectrum is affected rather than simply a specific wavelength.

Although several classes of chromatic modulators may be identified, at present only two classes are technically feasible. The first involves the mechanical displacement of a modulating element, such as a coloured filter, into a light beam so that the spectral content of the light beam is changed in dependence upon the displacement (see our copending Patent Application No.     ) based on U.K.Patent Applications Nos. 85 22202 and 85 28982. The second involves modulation produced by the onset or progression of chemical reactions. There is little doubt, however, that other classes of chromatic modulators will become technically feasible in the forseeable future and the present system of colour quantification described hereinafter will be equally applicable to these.

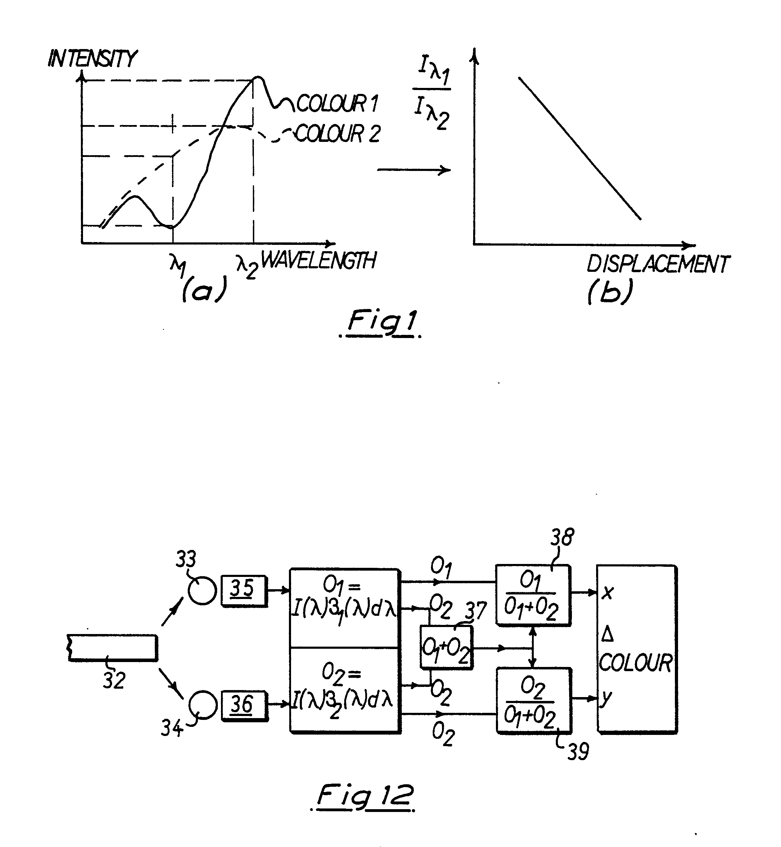

The simplest method for measuring displacement using chromatic modulation is to monitor intensity variations at two different wavelengths ( $_1$, $_2$) and to relate the ratio of the intensities to positions. Reference is directed to our aforementioned copending Application No.     for a fuller description of the latter technique. However, the technique is illustrated again in Figures 1A and 1B of the accompanying drawings. A polychromic light beam (i.e. of broad-band electromagnetic radiation, which could include visible and/or non-visible electromagnetic radiation) is modified by inserting into it a modulatory element, such as a colour filter, to an extent corresponding to a displacement to be measured. The plots of intensity (I) of the transmitted light against wavelength $\lambda$ of the light are shown in Fig. 1A for two different displacements of the filter. From a measurement of intensity at the two wavelengths for a number of displacements, the calibration graph of Fig. 1B can be constructed which corresponds to the variation of the ratio of the two wavelengths $\lambda_1$, $\lambda_2$ with displacement of the filter. Once the calibration of the intensies has been made, then in order to calculate displacement of the filter (and hence of the displacement to be measured) it is only necessary to measure the intensities of the emitted light at two different wavelengths, the displacement being obtained by calculating their ratio and comparing it with the calibration graph of Fig. 1B.

Although the latter technique is sound and has some attractive features, it also has practical disadvantages. For example, signal detection involves the use of complicated optics for spectral resolution but only a minimal amount of the available information is used. Furthermore, for multiparameter monitoring the number of wavelengths to be measured increases in proportion, so leading to increasingly more complicated hardware and software. The time resolution is also restricted, being limited by the period necessary for spectrum capture.

In the other possible chromatic modulation technique mentioned above, colour change in a chemical reaction, indicative of a chemical reaction progression, requires a proper measurement of colour rather than simply changes at given specific wavelengths. This would be essential, for instance, for chemical decomposition monitoring or pH meters. Up to now, there has been no satisfactory means of achieving such precise colour measurements.

It is a basic object of the present invention to provide a means of measuring colour change proper as distinct from intensity changes at a limited number of specific wavelengths.

In order to assist in an understanding of the concept of the present invention, it is advantageous first to review the conventional concepts and theories regarding colour measurement.

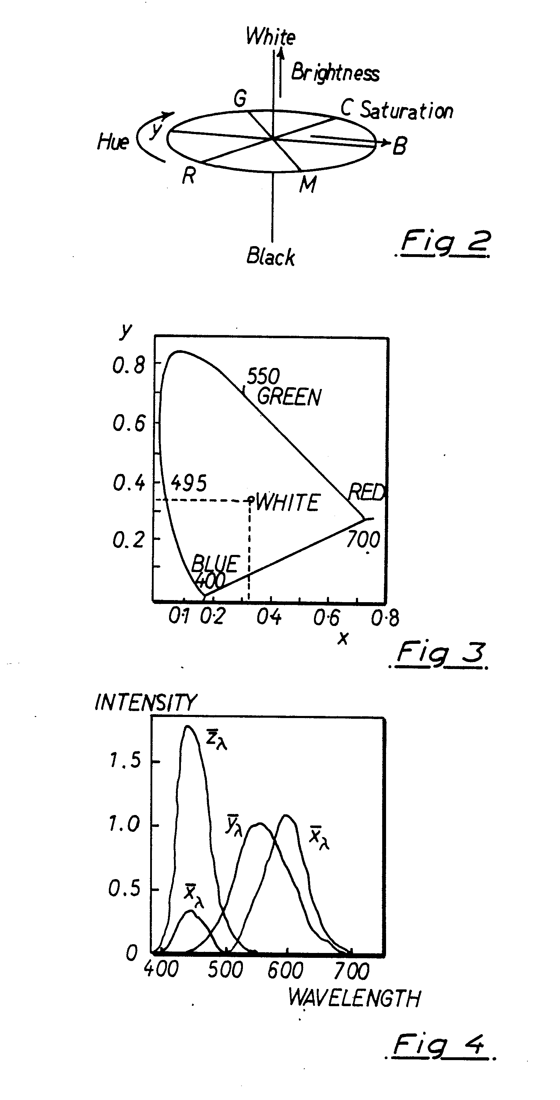

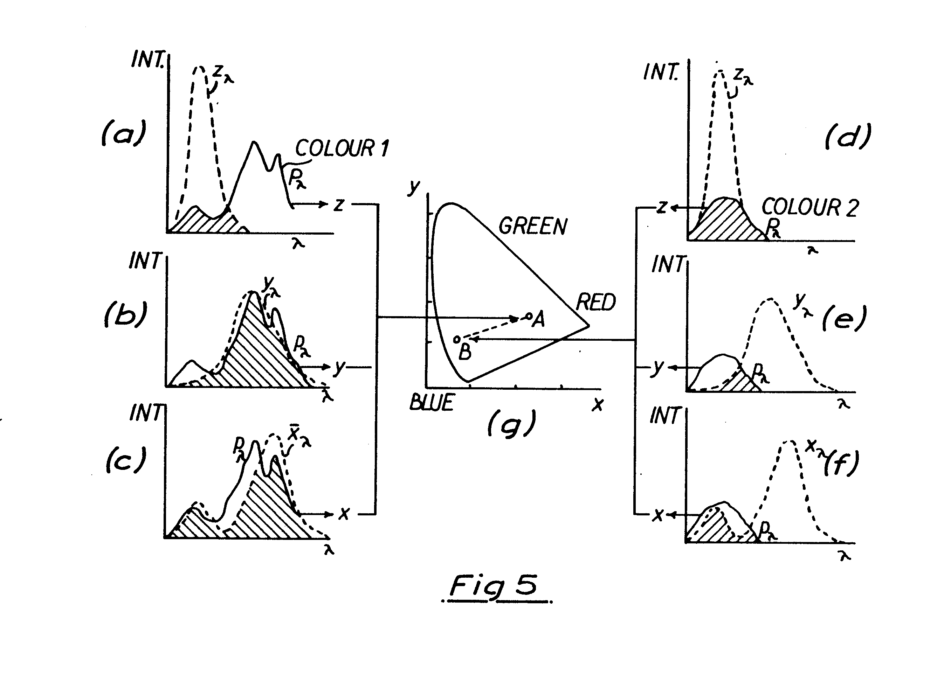

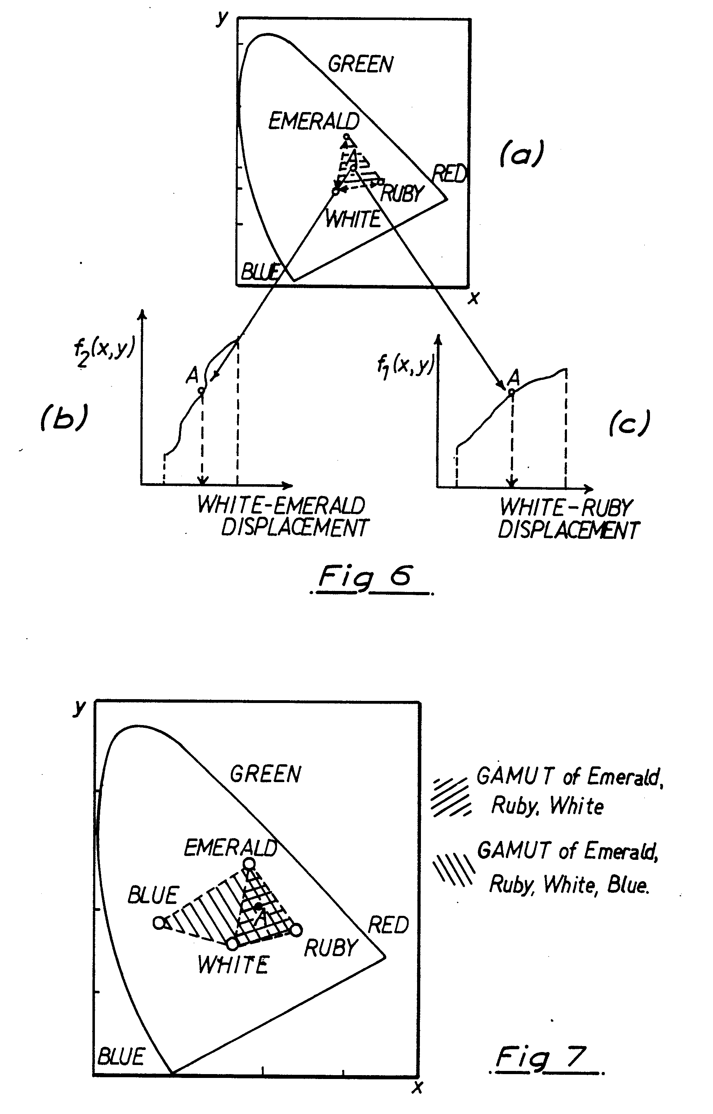

Fig. 2 shows a conventional three dimensional colour-space diagram in which saturation is represented radially, hue is represented circumferentially and brightness axially. The present invention is concerned principally with measuring hue and saturation which can be described approximately by the Spectral Power distribution (P$\lambda$).

A quantitative definition of a colour is achieved conventionally with a Chromaticity Diagram, the universally accepted diagram being the so-called C.I.E. diagram (Commission Internationale d'Eclairage) reproduced in Fig. 3. In this diagram, pure spectral colours lie on a horse-shoe shaped closed curve in x:y space defined by the Chromaticity Co-ordinates as defined below and various degrees of saturation or predominance of a particular wavelength are determined by position within this boundary. White colour corresponds to the point with co-ordinates (0.33, 0.33). Thus, by use of this diagram, any pàrticular colour may be identified by a single point in two-dimensional space.

The chromaticity co-ordinates (x, y) are defined as follows:

$$x = \frac{X}{(X + Y + Z)} \qquad \text{equation (1)}$$

$$y = \frac{Y}{(X + Y + Z)} \qquad \text{equation (2)}$$

where $X = \int_\lambda P(\lambda)\, \overline{x}(\lambda)d\lambda$

$Y = \int_\lambda P(\lambda)\, \overline{y}(\lambda)d\lambda$

$Z = \int_\lambda P(\lambda)\, \overline{z}(\lambda)d\lambda$

$P$ = power in the spectral power distribution at wavelength $\lambda$ and

$\overline{x}(\lambda)$, $\overline{y}(\lambda)$, $\overline{z}(\lambda)$ are colour matching functions, i.e. three different wavelength functions corresponding to the separate response of three distinct receptors.

Reference is now made to the accompanying Figure 4 which shows the typical required response characteristics of the three receptors which provide the functions $\overline{x}(\lambda)$, $\overline{y}(\lambda)$, $\overline{z}(\lambda)$. The relative juxtaposition of each of the colour matching functions will be noted. These colour matching functions can be stored digitally for micro-processor-aided analysis, a data bank of suitable colours for providing such colour matching functions having already been established.

Thus, the conventional technique for identifying the colour of any particular "impure" colour involves sampling that colour by means of the three receptors having the response characteristics of Fig. 4 and the using the resultant values of $\overline{x}(\lambda)$, $\overline{y}(\lambda)$ and $\overline{z}(\lambda)$ to calculate the values of x and y on the Chromaticity Diagram corresponding to that colour.

The accompanying Figure 5 shows how a colour change is represented on the Chromaticity Diagram. The three plots on the left-hand side in this diagram (Figs. 5a, 5b and 5c) show the responses of the z receptor (upper), y receptor (middle) and x receptor (lower) to a first colour and the plots on the right-hand side (Figs. 5d, 5e and 5f) show the responses of the three receptors to a second colour. The first colour has an intensity/wavelength characteristic indicated by the solid line in Figs. 5a, 5b and 5c. The response curves $\overline{z}(\lambda)$, $\overline{y}(\lambda)$ and $\overline{x}(\lambda)$ are indicated by chain lines in each case. The value of z ($= \int_\lambda P(\lambda)\, \overline{z}(\lambda)d\lambda$) is given by the area of overlap of the solid curve with the chain line curve in Fig. 5a. Likewise the values of y($= \int_\lambda P(\lambda)\, \overline{y}(\lambda)d\lambda$) and x($= \int_\lambda P(\lambda)\, \overline{x}(\lambda)d\lambda$) are given by the areas of overlap of the solid curves and chain line curves in Figs. 5b and 5c. The values of x and y can then be calculated using equations (1) and - (2) so as to arrive at point A in the Chromaticity Diagram of Fig. 5g.

The second colour is represented in Figs. 5d, 5e and 5f by a solid line and the response curves $\overline{z}(\lambda)$, $\overline{y}(\lambda)$ and $\overline{x}(\lambda)$ by chain lines. The corresponding values of x and y can again be calculated using euqations (1) and (2) to identify point B on the Chromaticity Diagram of Fig. 5g.

Changing the colour, by adding or subtracting power to certain parts of the spectrum thus results in a change on the Chromaticity Diagam along the straight line A -B. If the change in colour is brought about as a result of the relevant displacement of two components, such as the introduction of a coloured filter into a beam of white light as described in our copending Application No.     , the colour change along the straight line A-B can be related to said relative displacement to provide a measure thereof.

Measurement of two displacements, corresponding to two different parameters may also be accomplished using the aforegoing technique, as illustrated in the accompanying Figure 6. In this arrangement, a "white" light source is used to represent zero displacement. "Emerald" and "Ruby" represent first and second separate displacement extremes for monitoring the first and second parameters. If the "emerald" displacement is zero, then the "ruby" displacement is a simply, linearly related indication of true parameter 2 condition. If, however, both parameters 1 and 2 are non-zero then the observed colour might be A(co-ordinates $x_A$, $y_A$) from which, by stored calibration data, the values of parameters 1 and 2 may be uniquely determined.

Such a system could be used, for instance, to provide automatic temperature compensation in a displacement transducer by making the "white-emerald" parameter temperature sensitive.

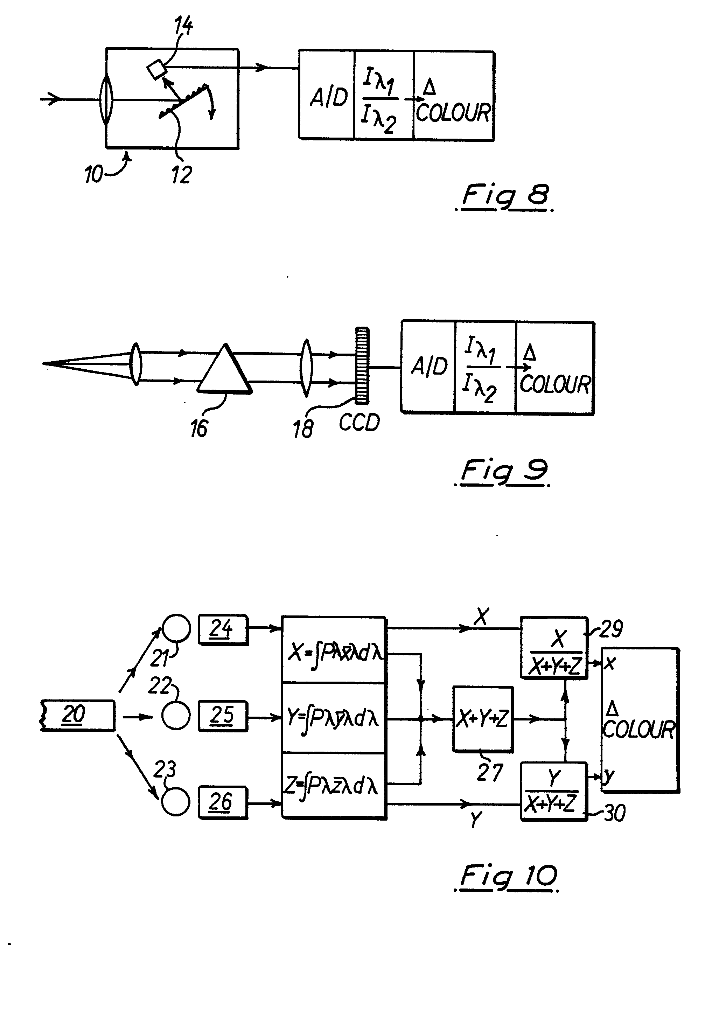

The aforegoing technique can also be applied to a system having a plurality of colour sources. As illustrated in the accompanying Figure 7, the introduction of a fourth colour source (e.g. blue) increases the gamut into a new zone and so leads to the possibility of detecting additional parameters simultaneously with the same measuring system. However, the point A is no longer uniquely determined since it may, for instance, by accessed with or without blue.

3

In order to overcome this ambiguity, it is necessary to depart from the normal colour vision representation in terms of only the two parameters (x, y) and to incorporate also the z parameter. This will enable the ambiguity regarding A to be resolved.

The aforegoing discussion outlines the theory by which a determination of "colour" can be made and a corresponding numerical representation established. The problem is that the known systems for effecting practical implementation of this theory are either expensive and cumbersome or of insufficient accuracy for detecting both intensity and spectral content changes simultaneously to provide an unambiguous and precise parameter measurement.

One known system is illustrated diagrammatically in Figure 8 and comprises a spectrum analysis 10 which includes a rotating grating 12 and a detector 14. This is the system referred to in our copending Application No. 85 22202 which requires the calculation of the

$$\text{ratio } \frac{I\lambda\,1}{I\lambda\,2}$$

where $I\lambda_1$ and $I\lambda_2$ are the measured intensities at two pre-selected wavelengths $\lambda_1$, $\lambda_2$. The time response of this system is relatively slow (~10ms). It costs at least £700, plus the cost of the necessary microprocessor for performing the computations. For multiple signal processing, further measurements must be made at at least a third wavelength $\lambda_3$.

Another known system is illustrated diagrammatically in the accompanying Figure 9. This uses a prism 16 and a charge-coupled device 18 together with a similar computing arrangement to the system of Fig. 8. This can operate faster than the system of Fig. 8 (~0.3ms) but is still expensive and requires cumbersome optics. Again it requires measurements to be made at an additional wavelength if a further signal channel is to be processed.

An object of the present invention is to provide a system for identifying quantitatively and unambiguously the colour of incident light, independent of both its intensity and spectral content variation and with sufficient accuracy for precise parameter monitoring.

According to a first aspect of the present invention, there is provided a colour detection system for identifying the colour of incident light, comprising at least two discrete colour detectors which have respective response characteristics such that the output signals X, Y ... of the detectors correspond respectively to $X = \int P(\lambda)x(\lambda)d\lambda$, $Y = \int P(\lambda)y(\lambda)d\lambda$..., where $P(\lambda)$ is the spectral power distribution at wavelength $\lambda$ and $\overline{x}(\lambda)$, $\overline{y}(\lambda)$ .. are colour matching functions corresponding to the respective response characteristics of the detectors, and means for analogue manipulation of X, Y ... to enable the values of x and y in the Chromaticity Diagram corresponding to the incident colour to be calculated.

According to a second aspect of the present invention, there is provided a colour detector system for identifying the colour of incident light, the detector system comprising three discrete colour detectors which have respective response characteristics such that the output signals of the detectors correspond respectively to $X = \int P(\lambda)x(\lambda)d\lambda$, $Y = \int P(\lambda)y(\lambda)d\lambda$ and $Z = \int P(\lambda)x(\lambda)d\lambda$, whereby the values of x and y in the Chromaticity Diagram can be calculated by simple analogue manipulation of the latter signals.

Preferably, the three detectors include respective coloured filters whose response characteristics correspond respectively to the curves of $x(\lambda)$, $y(\lambda)$ and $z(\lambda)$ in the accompanying Figure 4.

Advantageously, the coloured filters may simultaneously provide automatic focussing of the incident light onto the detectors.

The invention is described further hereinafter, by way of example only, with reference to the accompanying drawings, in which:

Fig.1a shows plots of intensity against wavelength for illustrating one form of detection principle described in more detail in our aforementioned copending Application No.    ;

Fig.1b is a plot of the ratio of two intensities against displacement derived from the graph of Fig.1;

Fig.2 is a conventional three-dimensional colour-space diagram;

Fig.3 is the conventional C.I.E. Chromaticity Diagram;

Fig.4 shows the response curves of three detectors having the responses $\overline{x}(\lambda)$, $\overline{y}(\lambda)$ and $\overline{z}(\lambda)$;

Fig.5 shows how a colour change is represented on the Chromaticity Diagram;

Fig. 6 shows how two different colour changes can be represented in the Chromaticity Diagam;

Fig.7 shows the Chromaticity Diagram in the case of a plurality of colour sources;

Fig.8 illustrates one system for measuring colour modulation;

Fig.9 illustrates another system for measuring colour modulation;

Fig.10 illustrates diagrammatically one possible embodiment of colour detector in accordance with the present invention;

Fig.11 is a further, simplified representation of the Chromaticity Diagram;

Fig.12 illustrates diagrammatically a second possible embodiment of colour detector in accordance with the present invention; and

Figs.13 and 14 are diagrams used in explaining the operation of the second embodiment of Fig.12.

Referring now to Figure 10 which shows one possible embodiment of a colour detector in accordance with the present invention, light arrives at the detector by way of an optical fibre 20, leading from, for example, a light modulating device of one of the types described and illustrated in our aforementioned copending Application. The incoming light from the fibre 20 is applied to three coloured spheres 21, 22, 23, each of which is located in front of a respective light detector 24, 25, 26, for example photo-sensitive diodes. The coloured spheres 21, 22, 23 each have different colour transmission characteristics which, combined with the responses of the detectors 24, 25,and 26 are arranged to provide three resultant colour matching functions, X, Y and Z corresponding respectively to

$$X = \int P(\lambda) \, \overline{x}(\lambda)d\lambda$$
$$Y = \int P(\lambda) \, \overline{y}(\lambda)d\lambda$$
and
$$Z = \int P(\lambda) \, \overline{z}(\lambda)d\lambda$$

as defined hereinbefore.

The signal values X, Y and Z are added in an analogue, algebraic element 27 and passed to further analoge algebraic elements, 29,30 which also receive X and Y direct. These elements 29,30 then calculate the analogue functions

$$x = \frac{X}{X+Y+Z} \qquad and \qquad y = \frac{Y}{X+Y+Z}$$

to provide the required values of x and y. Thus the point x,y on the Chromaticity Diagram is established to provide a numerical representation of the incident colour.

In essence, the aforegoing arrangement can be regarded as performing an analogue integration of the three colour matching functions x($\lambda$), y($\lambda$), z($\lambda$) which is obtained more efficiently than can be obtained using the digital techniques described above.

The time response of the present system is of the order of a few us or better. It can be made for very little cost in terms of hardware and is very compact. The required mathematical computations are minimal and a microprocessor is optional but not essential. The analogue to digital converter of the previous techniques is also optional but not essential. It will be noted that the present system can cope simultaneously with the processing of more than one signal input, i.e. colour changes resulting from variations in more than one parameter to be measured.

Since the present system measures "real" colour, it can be used to monitor colour changes in a light beam, due to modulation arising from displacement sensors, chemical change and any other modulating system.

The above described technique therefore enables colour to be identified and quantified in a particularly simple and inexpensive manner and to be related to the precise measurement of a parameter change, with automatic compensation for intensity and spectral content to remove any ambiguity. The technique can be combined with any modulator that produces colour change, including those described in our above identified copending Application No. to provide an efficient and accurate displacement measuring system wherein a measured change of colour is used to detect one or more variable parameters, such as displacement, pressure, temperature etc.

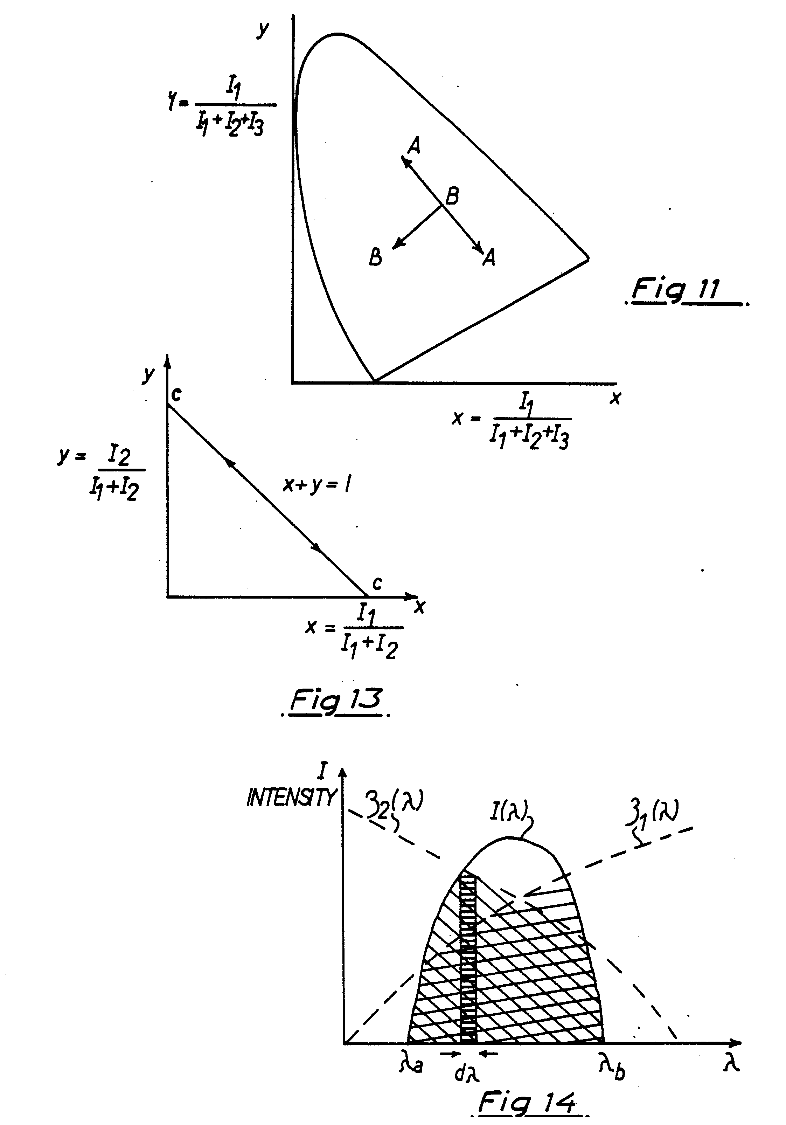

The above-described detector using tri-element detection to simulate the three detectors employed in the conventional analysis of colour has the advantage that not only may intensity changes due to increased system attenuation be eliminated but also changes in the spectral signature due to system ageing, rather than sensor modulation, may be identified. This is illustrated again in Fig.11 which is a simplified version of Fig.3. The line A-A corresponds to a colour change due to modulation whereas the line B-B corresponds to colour changes which are system-induced. In this case, the locus of the output of the detectors occurs in two dimensions.

Tri-element detection is, however, not essential to the invention and a detector having merely two photo-responsive elements is possible, as illustrated in Figs. 12, 13 and 14. In Fig.12, light from an optical fibre 32 is applied to two coloured spheres 33,34, each of which is located in front of a respective light responsive element 35,36, for example photo-sensitive diodes. The responsivity with respect to wavelength of the first element 35 is arranged to be different to that of the second element. From the signals from the two elements 35,36, the spectral distribution of the radiation incident on the detector can be calculated in terms of two parameters on the Chromaticity (C.I.E.) Diagram. The parameters can then be interpreted to provide an indication of the colour of the incident signal.

This is illustrated in Figs. 12, 13 and 14. Fig.14 shows examples of the response curves $\eta_1(\lambda)$ and $\eta_2(\lambda)$ of the first and second light responsive elements 35 and 36 of the detector of Fig.12.

The output of $O_1$ of element 35 is arranged to be given by

$$O_1 = \int_{\lambda a}^{\lambda b} I(\lambda)\, \eta_1(\lambda)\, d\lambda$$

and the output $O_2$ of element 36 is arranged to be given by

$$O_2 = \int_{\lambda a}^{\lambda b} I(\lambda)\, \eta_2(\lambda)\, d\lambda$$

The signal values $O_1$ and $O_2$ are added in an analogue arithmetic unit 37 and passed to further analogue arithmetic units 38,39 which also receive $O_1$ and $O_2$ direct. These elements 38,39 then calculate the analogue functions

$$x = \frac{O_1}{O_1 + O_2} \quad \text{and} \quad y = \frac{O_2}{O_1 + O_2}$$

to provide the required values of x and y on the Chromaticity Diagram.

Fig.13 is equivalent to Fig.11 when only two-element detection is made. The line C-C corresponds to a colour change due to modulation, i.e. the dominant colour in the detected signal lies on this line, the locus of which is $x + y = 1$.

Another embodiment of the multiple detector system involves sequential rather than parallel sampling of the signal (as shown on Fig.12). A practical form involves the so-called "colour diode" whose output signal is processed by newly developed electronic circuitry to provide extremely high sensitivity and long term stability.

## Claims

1. A colour detection system identifying the colour of incident light, characterised by at least two discrete colour detectors (35,36) which have respective response characteristics such that the output signals X, Y ... of the detectors correspond respectively to $X = \int P(\lambda)\,\overline{x}(\lambda)d\lambda$, $Y = \int P(\lambda)\,\overline{y}(\lambda)d\lambda$ ..., where $P(\lambda)$ is the spectral power distribution at wavelength $\lambda$ and $\overline{x}(\lambda)$, $\overline{y}(\lambda)$ .. are colour matching functions corresponding to the respective response characteristics of the detectors, and means (37,38,39) for analogue manipulation of X, Y ... to enable the values of x and y in the Chromaticity Diagram corresponding to the incident colour to be calculated.

2. A colour detector system for identifying the colour of incident light, characterised by three discrete colour detectors (24,25,26) which have respective response characteristics such that the output signals of the detectors correspond respectively to $X = \int P(\lambda)\,\overline{x}(\lambda)\,d\lambda$, $Y = \int P(\lambda)\,\overline{y}(\lambda)d\lambda$ and $Z = \int P(\lambda)\,\overline{z}(\lambda)d\lambda$, where $P(\lambda)$ is the spectral power distribution at wavelength $\lambda$ and $\overline{x}(\lambda)$, $\overline{y}(\lambda)$ and $\overline{z}(\lambda)$ are colour matching functions corresponding to the respective response characteristics of the three detectors, and means (27, 28,29) for analogue manipulation of X, Y and Z to enable the values of x and y in the Chromaticity Diagram corresponding to the incident colour to be calculated.

3. A colour detector system as claimed in claim 1 or claim 2, wherein the colour detectors are used in parallel.

4. A colour detector system as claimed in claim 1 or claim 2, wherein the colour detectors are used sequentially.

5. A colour detector system as claimed in any of claims 1 to 4, wherein each colour detector (35,36; 24, 25,26) includes a respective coloured filter (33,34; 21,22,23) having a different colour response characteristic.

6. A colour detector system as claimed in claim 2, or any of claims 3 and 4 when appendent to claim 2, wherein the three detectors (24,25,26) include respective coloured filters (21,22,23) whose response characteristics correspond respectively to the curves of $x\lambda$, $y\lambda$ and $z\lambda$ in the accompanying Figure 4.

6

7. A colour detector system as claimed in claim 1, wherein, for performing said analogue manipulation of the detector signals X and Y, there is included an analogue arithmetic means (37,38,39) which establishes the values of x and y in the Chromaticity Diagram from a calculation of

$$x = \frac{x}{X+Y} \quad \text{and } y = \frac{y}{X+Y}, \text{ respectively.}$$

8. A colour detector system as claimed in any of claims 2 to 6, wherein, for performing said analogue manipulation of the three detector signals X, Y and Z, there is included an analogue arithmetic means - (27,28, 29) which establishes the values of x and y in the Chromaticity Diagram from a calculation of

$$x = \frac{X}{X+Y+Z} \quad \text{and} \quad y = \frac{Y}{X+Y+Z}, \quad \text{respectively.}$$

INTENSITY

COLOUR 1
COLOUR 2

$\lambda_1$ $\lambda_2$ WAVELENGTH

(a)

$\dfrac{I_{\lambda_1}}{I_{\lambda_2}}$

DISPLACEMENT

(b)

_Fig 1_.

33

35

32

34

36

$O_1 = I(\lambda)\beta_1(\lambda)d\lambda$

$O_1$

$O_2$

37

$O_1 + O_2$

$O_2$

$O_2 = I(\lambda)\beta_2(\lambda)d\lambda$

$O_2$

38

$\dfrac{O_1}{O_1 + O_2}$

39

$\dfrac{O_2}{O_1 + O_2}$

x

$\Delta$

COLOUR

y

_Fig 12_.

*Fig 2*

*Fig 3*

*Fig 4*

*Fig 5.*

0 224 994

GREEN

EMERALD

RED

RUBY

WHITE

BLUE

$y$

$x$

(a)

$f_2(x,y)$

A

(b)

WHITE-EMERALD
DISPLACEMENT

$f_1(x,y)$

A

(c)

WHITE-RUBY
DISPLACEMENT

_Fig 6_

$y$

GREEN

EMERALD

BLUE

WHITE

RUBY

RED

A

BLUE

$x$

GAMUT of Emerald,
Ruby, White

GAMUT of Emerald,
Ruby, White, Blue.

_Fig 7_

$A/D$ | $\dfrac{I_{\lambda_1}}{I_{\lambda_2}}$ | $\Delta$ COLOUR

*Fig 8.*

$A/D$ | $\dfrac{I_{\lambda_1}}{I_{\lambda_2}}$ | $\Delta$ COLOUR

*Fig 9.*

$X=\int P\lambda\bar{x}\lambda d\lambda$

$Y=\int P\lambda\bar{y}\lambda d\lambda$

$Z=\int P\lambda\bar{z}\lambda d\lambda$

$X+Y+Z$

$\dfrac{X}{X+Y+Z}$

$\dfrac{Y}{X+Y+Z}$

$\Delta$ COLOUR

*Fig 10.*

$$y = \frac{I_1}{I_1 + I_2 + I_3}$$

$$x = \frac{I_1}{I_1 + I_2 + I_3}$$

**_Fig 11_**

$$y = \frac{I_2}{I_1 + I_2}$$

$$x + y = 1$$

$$x = \frac{I_1}{I_1 + I_2}$$

**_Fig 13_**

INTENSITY  $I$   $\zeta_2(\lambda)$   $I(\lambda)$   $\zeta_1(\lambda)$

$\lambda_a$   $d\lambda$   $\lambda_b$   $\lambda$

**_Fig 14_**